# EUROPEAN PATENT SPECIFICATION

(11) **EP 3 955 079 B1**
(45) Date of publication and mention of the grant of the patent: **22.05.2024**
(21) Application number: 19924545.7
(22) Date of filing: 19.09.2019
(51) Int. Cl.: G05D 1/00

(54) **SYSTEM AND METHOD FOR PLANNING TRAVELING PATH OF AUTOMATIC HARVESTER**
SYSTEM UND VERFAHREN ZUR PLANUNG DER FAHRSTRECKE EINER AUTOMATISCHEN ERNTEMASCHINE
SYSTÈME ET PROCÉDÉ DE PLANIFICATION DE TRAJET DE DÉPLACEMENT DE MOISSONNEUSE AUTOMATIQUE

(30) Priority: 09.04.2019 CN 201910280737
(43) Date of publication of application: 16.02.2022
(73) Proprietor: FJ Dynamics Technology Co., Ltd, Xiangyang, Hubei 441100 (CN)
(72) Inventor: WU, Di, Xiangyang, Hubei 441100 (CN); WANG, Bo, Xiangyang, Hubei 441100 (CN); ZHANG, Xiao, Xiangyang, Hubei 441100 (CN); YAO, Yuan, Xiangyang, Hubei 441100 (CN); WANG, Qingquan, Xiangyang, Hubei 441100 (CN); FAN, Shun, Xiangyang, Hubei 441100 (CN); SHEN, Yongquan, Xiangyang, Hubei 441100 (CN)
(74) Representative: Zaboliene, Reda
(86) International application number: PCT/CN2019/106710
(87) International publication number: WO 2020/206934

(56) References cited:
- US-A1- 2004 193 349
- US-A1- 2022 175 208

## Description

### FIELD

The subject matter relates to field of automatic harvesters, and more particularly, to a traveling path planning system and a traveling path planning method of an automatic harvester, for planning an optimal or a preferable traveling path.

### BACKGROUND

With the development of science and technology, the field of agricultural machinery has also been developed. Nowadays, farming by manpower is never seen, and automatic harvesters have been widely used in various links such as sowing, plant protecting, and harvesting. Modern agriculture has entered the era of mechanization. Furthermore, as the means of agricultural production continue to increase in recent years, agricultural machinery is continuously developed. To improve the economic benefits of agriculture and promote economic and social development, various agricultural machinery has been emerged and entered the countryside, which bring benefits to farmers. In other words, the modern agriculture increases the product efficiency and promotes economic development. The agricultural machinery improves the efficiency of agricultural production, brings great convenience to the farmers, and plays an important role in the rapid development of agriculture.

Therefore, further development and improvement of the agricultural machinery can bring continuously progress to the current agriculture. Generally, the agricultural machinery may have to operate on uneven lands or fields. Therefore, the farmers, the operators, or the drivers of the automatic harvesters may need to endure strong jolt and discomfort when driving the automatic harvesters, and a great labor intensity can thus be imagined. Therefore, the automatic harvesters begin to develop toward the direction of autonomous driving. The planning of a traveling path of the automatic harvester is a key factor for autonomous driving. In addition to automatic driving, when the farmers, operators, or the drivers of the automatic harvester need to drive the automatic harvesters, an optimal or a shortest path ought to be planned, to reduce the length of driving time and the fatigue of the farmers or operators. D1 (US 2004/193349A1) discloses a system and a method for determining a preferential path plan for a work vehicle includes organizing a work area into partition areas based on at least one of an obstacle, a concavity, and an exclusion area associated with the work area. The preferential path plan is determined based on the internal path plan of each partition and an external path plan of transferring from a prior partition to a latter partition until each partition in the work area is traversed.

### SUMMARY

An advantage of the present disclosure is that a traveling path planning method and a traveling path planning system of an automatic harvester are provided, which can plan an optimal path through manual, automatic or semi-automatic settings, to protect the automatic harvester and reduce the fatigue of the farmers or operators.

An advantage of the present disclosure is that a traveling path planning system and a traveling path planning method of an automatic harvester are provided. An optimal traveling path can be provided according to various information. Furthermore, the traveling path can be planned according to basic farmland information, working information, and traveling information.

An advantage of the present disclosure is that a traveling path planning system and a traveling path planning method of an automatic harvester are provided. An obstacle information is obtained in advance, so as to avoid the obstacle during the path planning or during the traveling.

An advantage of the present disclosure is that a traveling path planning system and a traveling path planning method of an automatic harvester are provided. An obstacle information is obtained in real time, to modify the traveling path, avoid the obstacle, or directly stop the automatic harvester from moving forward. In other words, if an obstacle like a small animal or a person suddenly occurs, the traveling path planning system stops the automatic harvester to ensure safety.

An advantage of the present disclosure is that a traveling path planning system and a traveling path planning method of an automatic harvester are provided. Each time an obstacle information is generated, the obstacle information is transmitted to a path planning module for further analysis, causing the traveling path planning module to re-plans another traveling path.

An advantage of the present disclosure is that a traveling path planning system and a traveling path planning method of an automatic harvester are provided. When a probe touches an obstacle, the path planning device determines whether the automatic harvester must stop moving.

An advantage of the present disclosure is that a traveling path planning system and a traveling path planning method of an automatic harvester are provided. When an infrared detector is used to detect whether an obstacle suddenly enters a dangerous area in front of the automatic harvester.

Another advantage of the present disclosure is that precision parts and complicated structure are not required. The manufacturing process is simple, and the cost is low.

Other advantages and features of the present disclosure are realized by the following detailed description, and can be realized by the combination of methods and devices in the appended claims.

The invention is set out in the appended set of claims. In order to realize the above objectives and advantages of the present disclosure, the present disclosure provides a traveling path planning method of an automatic harvester, including following steps: (a) detecting and forming, by a detection device, a basic farmland information; and (b) receiving and analyzing, by a path planning device, the basic farmland information, and planning a traveling path of the automatic harvester.

According to the method of the present disclosure, the basic farmland information comprises size, surface area, shape, coordinates, or crop category.

According to the method of the present disclosure, a traveling mode of the automatic harvester is preset by a path setting module of the path planning device, and a traveling information is generated.

According to the method of the present disclosure, the traveling information comprises a traveling path of homocentric-squares-shaped or zigzag-shaped, or an optimal path or a shortest path, or a path being spiral from outwards to inwards in circles.

According to the method of the present disclosure, the traveling path of homocentric-squares-shaped is selected when a farmland land is square, and the traveling path of zigzag-shaped is selected when the farmland is rectangular.

According to the method of the present disclosure, in step (a), the basic farmland information is obtained by an automatic detection module through a fixed point detection or a moving detection.

According to the method of the present disclosure, the automatic detection module is one of an infrared sensor, a laser sensor, an ultrasonic sensor, an image sensor, or a GPS satellite positioning module.

According to the method of the present disclosure, step (a) further includes detecting, through an obstacle pre-detector, whether any obstacle exists, and generating an obstacle information and sending the obstacle information to the path planning device.

According to the method of the present disclosure, when the automatic harvester is driving, the method further includes generating, by an obstacle driving detector, an obstacle information when an obstacle is detected, and sending the obstacle information to the path planning device; determining, by the path planning device, whether the automatic harvester immediately stops, keeps driving, or re-plans another traveling path accordingly.

In order to realize the above objectives and advantages of the present disclosure, the present disclosure provides a traveling path planning system applied in an automatic harvester, including: a detection device configured to obtain a basic farmland information of a farmland; and a path planning device connected to the detection device, and configured to analyze the basic farmland information of the detection device and planning a traveling path of the automatic harvester.

According to an embodiment of the present disclosure, the basic farmland information comprises size, surface area, shape, coordinates, or crop category.

According to an embodiment of the present disclosure, the path planning device comprises a path setting module, which is configured to preset a traveling mode of the automatic harvester and generate a traveling information.

According to an embodiment of the present disclosure, the traveling mode is homocentric-squares-shaped or zigzag-shaped, or has an optimal path or a shortest path, or being spiral from outwards to inwards in circles.

According to an embodiment of the present disclosure, the detection device includes at least one automatic detection module connected to the path planning device, the automatic detection module is configured to obtain the basic farmland information and transmit the basic farmland information to the path planning device.

According to an embodiment of the present disclosure, the automatic detection module is disposed on an automatic harvester, an unmanned aircraft, or a wireless detector to perform the moving detection.

According to an embodiment of the present disclosure, the automatic detection module is one of an infrared sensor, a laser sensor, an ultrasonic sensor, an image sensor, or a GPS satellite positioning module.

According to an embodiment of the present disclosure, the detection device comprises at least one manual setting module connected to the path planning device, a basic farmland information is input to the path planning device through the manual setting module.

According to an embodiment of the present disclosure, the detection device includes at least one obstacle pre-detector connected to the path planning device, the obstacle pre-detector is configured to obtain an obstacle information through a fixed point detection or a moving detection, and the obstacle information is sent to the path planning device.

According to an embodiment of the present disclosure, the detection device further includes at least one obstacle driving detector connected to the path planning device, the obstacle driving detector is disposed on the automatic harvester, and is configured to send an obstacle information to the path planning device when the automatic harvester encounters an obstacle, and the path planning device is further configured to re-plan another traveling path according to the obstacle information.

According to an embodiment of the present disclosure, the obstacle driving detector includes a driving capturing sensor, the driving capturing sensor comprises a plurality of cameras surrounding the automatic harvester and configured to collect images around the automatic harvester.

According to an embodiment of the present disclosure, the obstacle driving detector includes at least one probe disposed in front of the automatic harvester, the probe is configured to detect whether any obstacle exists in front of the automatic harvester.

According to an embodiment of the present disclosure, the obstacle driving detector includes at least one infrared detector disposed in front of the automatic harvester, the infrared detector is configured to sense people or animals that suddenly approach the automatic harvester.

According to an embodiment of the present disclosure, the traveling path planning system is set in an automatic harvester, a remote control, a smart phone, a radio control, or a smart tablet.

Through the following description and the drawings, the further objectives and advantages of the present disclosure can be realized.

These objectives, features and advantages of the present disclosure can be explained in by the following detailed description, drawings and claims.

### BRIEF DESCRIPTION OF THE DRAWINGS

FIG. 1 is a block diagram of a traveling path planning system of an automatic harvester according to an embodiment of the present disclosure.

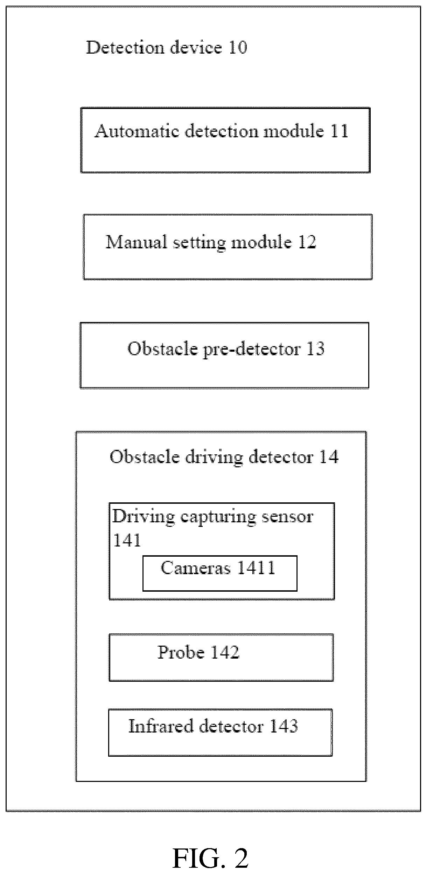

FIG. 2 is a block diagram of a detection device according to an embodiment of the present disclosure.
FIG. 3 is a diagrammatic view of a traveling mode of homocentric-squares-shaped planned by a traveling path planning system according to an embodiment of the present disclosure.
FIG. 4 is a diagrammatic view of a traveling mode of zigzag-shaped planned by the a traveling path planning system according to an embodiment of the present disclosure.
FIG. 5 is a block diagram of an automatic harvester according to an embodiment of the present disclosure.
FIG. 6 is a flowchart of a traveling path planning method of an automatic harvester according to an embodiment of the present disclosure.

### DETAILED DESCRIPTION

The following description is used to disclose the present disclosure so that those skilled in the art can implement the present disclosure. The preferred embodiments in the following description are only examples, and those skilled in the art can think of other obvious variations. The basic principles of the present disclosure defined in the following description can be applied to other embodiments, modifications, improvements, equivalents, and other technical solutions that do not deviate from the spirit and scope of the present disclosure.

Those skilled in the art should understand that, in the disclosure of the present disclosure, an orientation or a positional relationship indicated by the terms "longitudinal", "lateral", "upper", "lower", "front", "rear", "left", "right", "vertical", "horizontal", "top", "bottom", "inner", "outer", etc. is based on the orientation or the positional relationship shown in the drawings, which is only for the convenience of describing the present disclosure and for simplifying the description, rather than indicating or implying a device or an element must have a specific orientation, and is constructed and operated in a specific orientation, so the above terms should not be understood as a limitation of the present disclosure.

It can be understood that the term "a" should be understood as "at least one" or "one or more", that is, in one embodiment, the number of a kind of element may be one, and in another embodiment, the number of the kind of element can be more than one, and the term "one" cannot be understood as a restriction on the number.

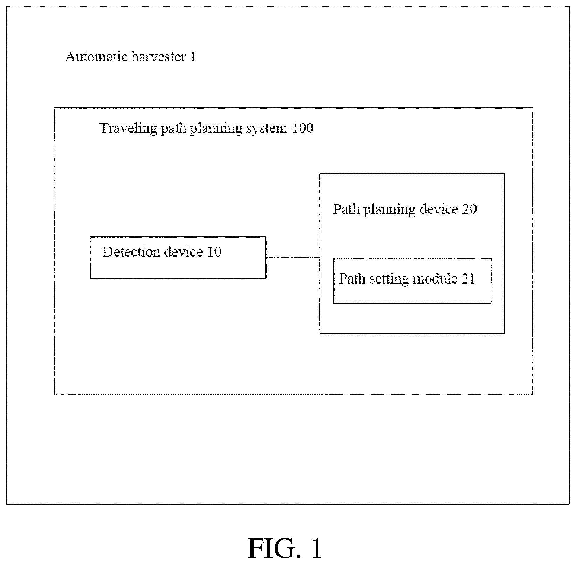

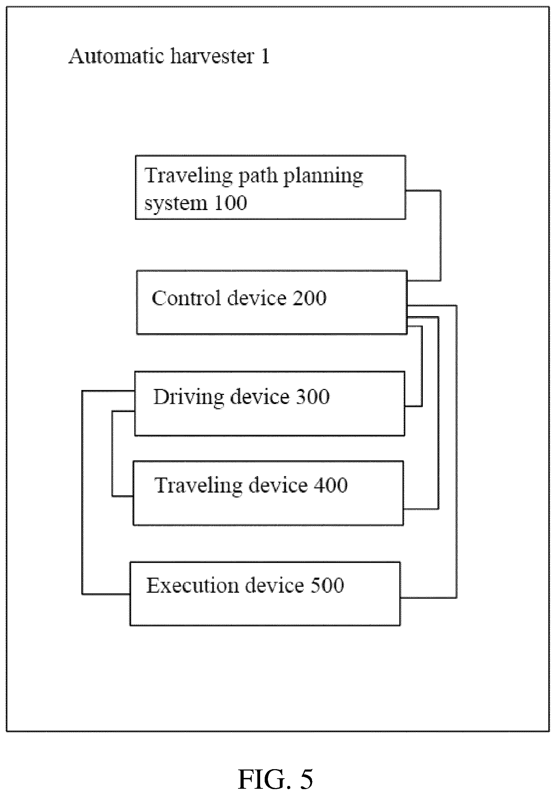

Referring to FIGS. 1 and 5, an embodiment of a traveling path planning system and a traveling path planning method of an automatic harvester are illustrated. The automatic harvester 1 plans a traveling path through the traveling path planning system 100 during operation. The planning of the traveling path takes into account various conditions of a farmland or field, as well as various ways of agricultural operation. Furthermore, the traveling path planning system 100 plans the traveling path according to size, shape, and features of the farmland or field, so that an optimal traveling path can be obtained. In other words, the traveling path planning system 100 is applicable to the automatic harvester 1 to plan the traveling path of the automatic harvester 1 in advance. In particular, the traveling path planning system 100 can be used not only for the harvester, but is also applicable to various agricultural machines such as rice transplanters, plant protection machines, transplanting machines, scarifiers, soil preparation machines, etc., not being limited in the present disclosure. In addition to automatic harvester, the traveling path planning system can be installed in a remote control, a smart phone, a radio control, or a smart tablet.

In the embodiment of the disclosure, the traveling path planning system 100 includes a detection device 10 and a path planning device 20. The detection device 10 is connected to the path planning device 20. The connection mode may be a wired connection or a wireless connection, not limited in the disclosure. Furthermore, the detection device 10 is used to obtain information of surface area, shape, and crop category of the farmland or the field. The surface area or shape are related to the scope of the field where the automatic harvester is to operate. The path planning device 20 includes a path setting module 21, which is connected to the detection device 10 and used to set a traveling mode of the automatic harvester 1. The traveling mode may be homocentric-squares-shaped or zigzag-shaped, or may have an optimal path or a shortest path, or spiral from outwards to inwards in circles. The path planning device 20 plans the traveling path of the automatic harvester 1 according to the information from the detection device 10.

In the embodiment of the disclosure, the detection device 10 includes at least one automatic detection module 11 and a manual setting module 12. Each of the automatic detection module 11 and the manual setting module 12 is connected to the path planning device 20. The automatic detection module 11 can perform a detection from a fixed point or while moving. The fixed point detection is to set a plurality of the automatic detection modules 11 on the corners of the farmland or field, and obtain a basic farmland information according to the sensing by the automatic detection modules 11, which includes sensing the scope, the shape, the coordinates, and the crop category of the farmland or field. The moving detection is to install the automatic detection module 11 on an automatic harvester, an unmanned aircraft, or a wireless detector, so that the basic farmland information can be obtained as the automatic harvester, the unmanned aircraft, or the operator, moves. The automatic detection module 11 can be an infrared sensor, a laser sensor, an ultrasonic sensor, an image sensor, or a GPS satellite positioning module, etc., not limited in the disclosure. In addition, the manual setting module 12 obtains the basic farmland information in advance such as the scope, the shape, the coordinates, and the crop category of the farmland or land, which can be manually input to the path planning device 20 through the manual setting module 12. The path planning device 20 analyzes the information of the automatic detection module 11 or the manual setting module 12 and the path setting module 21, and plans the traveling path of the automatic harvester 1.

In the embodiment of the disclosure, the detection device 10 further includes an obstacle pre-detector 13, which is used to detect whether any obstacle exists, and generates an obstacle information when an obstacle exists. The obstacle information is then sent to the path planning device 20. The obstacle pre-detector 13 can be designed to perform synchronous detection with the automatic detection module 11. In other words, when the automatic detection module 11 obtains the scope and the shape of the farmland or field, the obstacle pre-detector 13 reveals the obstacle information at the same time. Thus, when the path planning device 20 plans the travel path, the path planning device 20 can also take the obstacle into consideration and plan to avoid it at the same time. In other words, the automatic detection module 11 may also be the obstacle pre-detector 13, which obtains the basic farmland information and the obstacle information simultaneously. The path planning device 20 analyzes the information of the automatic detection module 11, the manual setting module 12, the obstacle pre-detector 13, and the path setting module 21 to plan the traveling path of the automatic harvester 1.

Furthermore, the obstacle pre-detector 13 can be used to distinguish between the obstacle and the crops. The path planning device 20 determines whether the size of the obstacle affects the traveling path according to the obstacle information. If not, the planning of the traveling path is not affected; if yes, the path planning device 20 re-plans another traveling path. The obstacle information may include size, image, coordinates, etc. of the obstacle, not limited in the disclosure. The obstacle pre-detector 13 and the automatic detection module 11 can both perform the fixed point detection or the moving detection synchronously. In addition, the obstacle pre-detector 13 can be an infrared sensor, a laser sensor, an ultrasonic sensor, an image sensor, or a GPS satellite positioning module, etc., not limited in the disclosure.

In the embodiment of the disclosure, the detection device 10 further includes an obstacle driving detector 14, which is used to detect whether any obstacle exists when driving, and further obtains an obstacle information when an obstacle exists. The obstacle information is then sent to the path planning device 20. The path planning device 20 re-plans another travel path according to the obstacle information. The obstacle driving detector 14 is set on the automatic harvester 1, preferably at the front of the automatic harvester 1. As such, when the automatic harvester 1 is driven forward, an obstacle can be directly detected by the obstacle driving detector 14 when there is an obstacle in the path. In particular, when the obstacle is detected by the obstacle driving detector 14, the automatic harvester 1 re-plans the traveling path based on the existing basis. That is, the traveling path of the automatic harvester 1 is planned based on the information of the automatic detection module 11, the manual setting module 12, the obstacle pre-detector 13, and the path setting module 21, and based on this, another traveling path of the automatic harvester 1 is planned further according to the obstacle information from the obstacle driving detector 14.

The obstacle driving detector 14 can distinguish between the obstacle and the crops, obtain the obstacle information such as the size, and transmit the obstacle information including the size to the path planning device 20. The path planning device 20 determines whether the obstacle affects the traveling path. If not, the original planned path is followed; if yes, the obstacle information is transmitted to the path planning device 20 to re-plan another traveling path. In particular, the obstacle driving detector 14 can obtain features from the image and distinguish the obstacle from the crops accordingly. The obstacle driving detector 14 is installed on the automatic harvester 1. Thus, when the automatic harvester 1 is traveling, at least one signal from the forward path, such as signals from the crops and the obstacle, can be obtained. The obstacle driving detector 14 includes a driving capturing sensor 141, which collects images of area around the automatic harvester 1 and forms a video signal. In particular, the driving capturing sensor 141 includes a plurality of cameras 1411 surrounding the automatic harvester 1 to collect the images around the automatic harvester 1 and form the video signal. The obstacle driving detector 14 further includes at least one probe 142, which is disposed at the front of the automatic harvester, to detect any obstacle, such as tree, wall, large rock, pit, puddle, river, etc., at the front of the automatic harvester 1, and to detect the size or other features of the obstacle. The detection information is then sent to the path planning device 20. The path planning device 20 determines whether the automatic harvester must stop moving. In addition, the obstacle driving detector 14 further includes at least one infrared detector 143, which is disposed at the front of the automatic harvester 1 to sense people or animals suddenly entering or crossing the region in front of the automatic harvester 1.

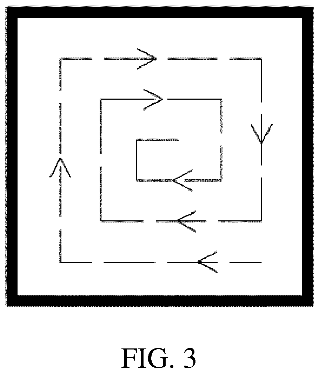

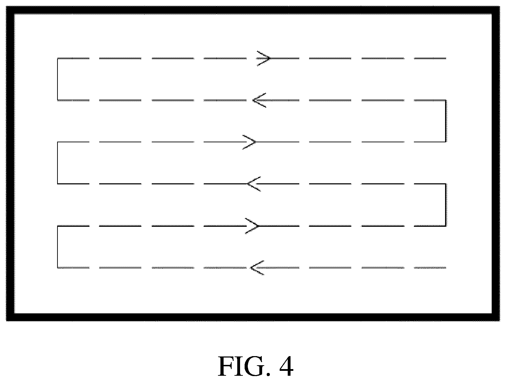

In the embodiment of the disclosure, the path setting module 21 is used to set the traveling mode of the automatic harvester. The traveling mode may be homocentric-squares-shaped or zigzag-shaped, or may have an optimal path or a shortest path, or be spiral from outwards to inwards in circles. A user or an operator of the automatic harvester may select the traveling mode of homocentric-squares-shaped or zigzag-shaped in advance according to the shape of the field or farmland. For example, when the field or farmland is square, the homocentric-squares-shape can be used. When the field or farmland is rectangular, the zigzag-shape can be used. As shown in FIG. 3, the outer thick lines represent the edges of the field or farmland, the dashed lines represent the travel path of the automatic harvester, and the arrows represent the travel direction of the automatic harvester. A traveling path of homocentric-squares-shaped is shown in FIG. 3, and the automatic harvester 1 travels according to the dashed lines and arrows. As shown in FIG. 4, the outer thick lines represent the edges of the field or farmland, the dashed lines represent the traveling path of the automatic harvester, and the arrows represent the driving direction of the automatic harvester. A traveling path of zigzag-shaped is shown in FIG. 4, and the automatic harvester 1 travels according to the dashed lines and arrows. The zigzag-shaped pattern means traveling back and forth in rows. Therefore, when the field or farmland is not rectangular but has any other shape, the zigzag-shaped mode can also be used. That is, when the automatic harvester 1 travels to the boundary of one row, it turns back and onto another row, and similarly, when it travels to another boundary, it turns back again. In other words, when the zigzag-shaped mode is selected, the automatic harvester 1 travels back and forth row by row between the boundaries of the field, and each row will bring it to the boundaries of the field. In addition, the setting of the shortest or the optimal path is intelligently achieved. When the user or the operator of the automatic harvester selects such mode, the path planning device 20 plans the shortest or the optimal path according to all options. The shortest path is that the automatic harvester 1 travels in the entire field for a least distance travelled, and the optimal path is an optimal path planned when taking an overall situation into consideration. In addition, the shape of the field or farmland is not always a complete rectangle or a complete square, but may also be irregular. In this case, in addition to the zigzag-shaped path, the shortest path, or the optimal path, a spiral path from outwards to inwards in circles can also be used. The way of spiralling from outwards to inwards in circles is to directly travel inward in circular fashion according to the boundary shape of the field. In other words, the spiral path from outwards to inwards in circles is similar to the zigzag-shaped path, and the difference therebetween are relevant to different shapes of the farmland.

The path planning device 20 plans the traveling path of the automatic harvester 1 based on the information of the detection device 10 and the path setting module 21. Multiple different traveling modes can be used on a same field. The same field can be divided into different regions through the manual setting module 12, which are then associated with different traveling modes. In addition, the optimal path may also be a combination of probabilities including the path of homocentric-squares-shaped, the path of zigzag-shaped, the optimal path, the shortest path, or the path being spiral from outwards to inwards in circles.

As shown in FIG. 5, the automatic harvester 1 includes the traveling path planning system 100, a control device 200, a driving device 300, a traveling device 400, and an execution device 500. Each of the traveling path planning system 100, the driving device 300, the traveling device 400, and the execution device 500 is connected to the control device 200. The control device 200 is a central control traveling path planning system of the automatic harvester 1, which is used to control the various devices of the automatic harvester 1. The driving device 300 is connected to and provides power to the execution device 500, the traveling device 400, and the control device 200. The control device 200 controls the operation of various devices. The driving device 300 can be driven by fuel, electric or hybrid power of fuel and electric, which is not limited in the disclosure. The traveling device 400 is used to drive the automatic harvester 1 to travel by caterpillar tracks, by two wheels, or by four wheels. The execution device 500 is used to perform harvesting operations, such as harvesting. The traveling path planning system 100 is used to plan the traveling path.

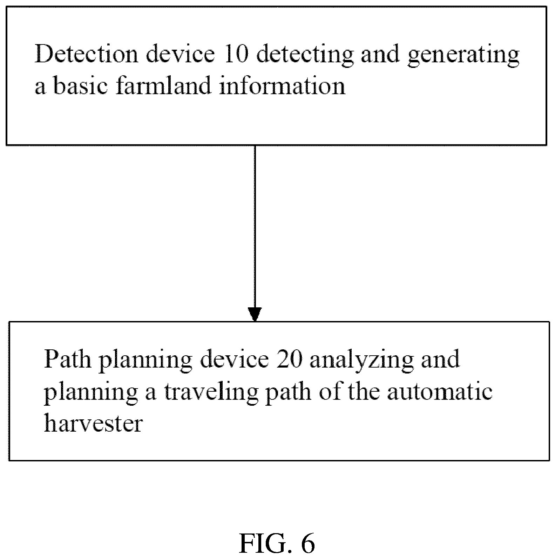

In addition, FIG. 6 illustrates a method for planning a traveling path of an automatic harvester according to the present disclosure. The method includes following steps.
(a) The detection device 10 detects and generates a basic farmland information.
(b) The path planning device 20 receives and analyzes the basic farmland information, and plans a traveling path of the automatic harvester accordingly.

In step (a), the basic farmland information includes information of the farmland such as size, surface area, shape, coordinates, and crop category.

In step (b), the path setting module of the path planning device preset a traveling mode of the automatic harvester and generate a traveling information. The traveling information includes a traveling path of homocentric-squares-shaped or zigzag-shaped, or an optimal path or a shortest path, or a path being spiral from outwards to inwards in circles.

In step (a), the basic farmland information is obtained through an automatic detection module 11, which perform a detection from a fixed point or while moving. In particular, the automatic detection module 11 can cooperate with an automatic harvester, an unmanned aircraft, or a wireless detector to obtain the basic farmland information. In addition, the automatic detection module 11 can be an infrared sensor, a laser sensor, an ultrasonic sensor, an image sensor, or a GPS satellite positioning module.

In step (a), the basic farmland information is manually input through a manual setting module 12.

In step (a), an obstacle pre-detector 13 detects whether any obstacle exists and generates an obstacle information. In particular, the obstacle pre-detector 13 works simultaneously with the automatic detection module 11. Furthermore, in step (a), in addition to the basic farmland information, the obstacle information is also generated when an obstacle exists. Both the basic farmland information and the obstacle information are transmitted to the path planning device 20, which are then analyzed by the path planning device 20.

In step (c), the path of homocentric-squares-shaped is preferred when the farmland is square, and the path of zigzag-shaped is preferred when the farmland is rectangular. In particular, the zigzag-shape path means traveling back and forth in rows.

In particular, when the automatic harvester obtains the traveling path through the traveling path planning method and drives on the farmland according to the traveling path, an obstacle driving detector 14 of the detection device 10 works during the driving process, and generate an obstacle information when an obstacle is detected, which is then sent to the path planning device 20. The path planning device 20 determines whether the automatic harvester 1 immediately stops, keeps driving, or re-plans another traveling path according to the obstacle information. In particular, the path planning device 20 enables the automatic harvester 1 to immediately re-plan a new traveling path after the automatic harvester 1 stops, and restarts the automatic harvester 1 after the new traveling path is planned.

One having ordinary skill in the art will understand that the above details and the embodiments shown in the drawings are only examples, and are not limited in the present disclosure.

## Claims

1. A traveling path planning method of an automatic harvester (1), comprising:
(a) detecting and forming, by a detection device (10), a basic farmland information of a farmland; and
(b) receiving and analyzing, by a path planning device (20), the basic farmland information, and planning a traveling path of the automatic harvester (1) according to the basic farmland information, wherein the basic farmland information comprises size, surface area, shape, coordinates, or crop category of the farmland;
when the automatic harvester (1) is driving, generating, by an obstacle driving detector (14), an obstacle information when an obstacle is detected, and sending the obstacle information to the path planning device (20);
determining, by the path planning device (20), whether the automatic harvester (1) stops, keeps driving, or re-plans another traveling path accordingly;
**characterized in that**, the traveling path planning method further comprising:
presetting, by a path setting module (21) of the path planning device (20), a traveling mode of the automatic harvester (1) based on the shape of the farmland and generating a traveling information, causing the automatic harvester (1) to drive based on the traveling information, the traveling information comprises a traveling path of homocentric-squares-shaped or zigzag-shaped, or a path being spiral from outwards to inwards in circles, the traveling path of homocentric-squares-shaped is selected when the farmland is square, and the traveling path of zigzag-shaped is selected when the farmland is rectangular.

2. The traveling path planning method of claim 1, **characterized in that**, in step (a), the basic farmland information is obtained by an automatic detection module (11) through a fixed point detection or a moving detection.

3. The traveling path planning method of claim 2, **characterized in that**, the automatic detection module (11) is one of an infrared sensor, a laser sensor, an ultrasonic sensor, an image sensor, or a GPS satellite positioning module.

4. The traveling path planning method of claim 1, **characterized in that**, step (a) further comprises:
detecting, through an obstacle pre-detector (13), whether any obstacle exists;
generating an obstacle information and sending the obstacle information to the path planning device (20).

5. A traveling path planning system (100) applied in an automatic harvester (1), comprising:
a detection device (10) configured to obtain a basic farmland information of a farmland; and
a path planning device (20) connected to the detection device (10), and configured to analyze the basic farmland information of the detection device (10) and planning a traveling path of the automatic harvester (1) according to the basic farmland information, wherein the basic farmland information comprises size, surface area, shape, coordinates, or crop category of the farmland;
the detection device (10) further comprises at least one obstacle driving detector (14) connected to the path planning device (20), the obstacle driving detector (14) is disposed on the automatic harvester (1), and is configured to send an obstacle information to the path planning device (20) when the automatic harvester (1) encounters an obstacle, and the path planning device (20) is further configured to stops, keeps driving, or re-plan another traveling path according to the obstacle information;
**characterized in that**, the path planning device (20) comprises a path setting module (21), which is configured to preset a traveling mode of the automatic harvester (1) based on the shape of the farmland and generate a traveling information, causing the automatic harvester (1) to drive based on the traveling information, the traveling mode is homocentric-squares-shaped or zigzag-shaped, or being spiral from outwards to inwards in circles, the traveling path of homocentric-squares-shaped is selected when the farmland is square, and the traveling path of zigzag-shaped is selected when the farmland is rectangular.

6. The traveling path planning system (100) of claim 5, **characterized in that**, the detection device (10) comprises at least one automatic detection module (11) connected to the path planning device (20), the automatic detection module (11) is configured to obtain the basic farmland information and transmit the basic farmland information to the path planning device (20).

7. The traveling path planning system (100) of claim 6, **characterized in that**, the automatic detection module (11) is disposed on an automatic harvester (1), an unmanned aircraft, or a wireless detector to perform the moving detection.

8. The traveling path planning system (100) of claim 6, **characterized in that**, the automatic detection module (11) is one of an infrared sensor, a laser sensor, an ultrasonic sensor, an image sensor, or a GPS satellite positioning module.

9. The traveling path planning system (100) of claim 5, **characterized in that**, the detection device (10) comprises at least one manual setting module (21) connected to the path planning device (20), a basic farmland information is input to the path planning device (20) through the manual setting module (21).

10. The traveling path planning system (100) of claim 5, **characterized in that**, the detection device (10) further comprises at least one obstacle driving detector (14) connected to the path planning device (20), the obstacle driving detector (14) is disposed on the automatic harvester (1), and is configured to send an obstacle information to the path planning device (20) when the automatic harvester (1) encounters an obstacle, and the path planning device (20) is further configured to re-plan another traveling path according to the obstacle information.

11. The traveling path planning system (100) of claim 10, **characterized in that**, the obstacle driving detector (14) comprises a driving capturing sensor (141), the driving capturing sensor (141) comprises a plurality of cameras (1411) surrounding the automatic harvester (1) and configured to collect images around the automatic harvester (1).

12. The traveling path planning system (100) of claim 10, **characterized in that**, the obstacle driving detector (14) comprises at least one probe (142) disposed in front of the automatic harvester (1), the probe (142) is configured to detect whether any obstacle exists in front of the automatic harvester (1).

13. The traveling path planning system (100) of claim 10, **characterized in that**, the obstacle driving detector (14) comprises at least one infrared detector (143) disposed in front of the automatic harvester (1), the infrared detector (143) is configured to sense people or animals that suddenly approach the automatic harvester (1).

## Patentansprüche

1. Das Verfahren zur Fahrwegplanung einer automatischen Erntemaschine (1), umfassend:
(a) das Erfassen und Bilden grundlegender Ackerlandinformationen über ein Ackerland durch eine Erfassungsvorrichtung (10);
und
das Empfangen und Analysieren der grundlegenden Ackerlandinformationen durch ein Wegplanungsgerät (20) und das Planen eines Fahrwegs der automatischen Erntemaschine (1) gemäß den grundlegenden Ackerlandinformationen, wobei die grundlegenden Ackerlandinformationen Größe, Fläche, Form, Koordinaten oder Erntekategorie des Ackerlandes umfassen;
wenn die automatische Erntemaschine (1) fährt, das Erzeugen einer Hindernisinformation durch einen Hindernisfahrdetektor (14), wenn ein Hindernis erkannt wird, und das Senden der Hindernisinformation an die Wegplanungseinrichtung (20);
das Bestimmen durch die Wegplanungseinrichtung (20), ob die automatische Erntemaschine (1) anhält, weiterfährt oder entsprechend einem anderen Weg neu plant;
**dadurch gekennzeichnet, dass** das Fahrwegplanungsverfahren weiterhin Folgendes umfasst:
das Voreinstellen eines Fahrmodus der automatischen Erntemaschine (1) durch ein Pfadeinstellmodul (21) der Pfadplanungsvorrichtung (20), basierend auf der Form des Ackerlandes und Erzeugen von Fahrinformationen, wodurch die automatische Erntemaschine (1) dazu veranlasst wird. Fahren Sie basierend auf den Reiseinformationen. Die Reiseinformationen umfassen einen Bewegungspfad in Form von homozentrischen Quadraten oder Zickzacks oder einen Pfad, der spiralförmig von außen nach innen in Kreisen verläuft. Der Bewegungspfad wird in Form von homozentrischen Quadraten ausgewählt, wenn das Ackerland quadratisch ist, und der Fahrweg wird in Zickzackform ausgesucht, wenn das Ackerland rechteckig ist.

2. Das Verfahren zur Routenplanung nach Anspruch 1, **dadurch gekennzeichnet, dass** in Schritt (a) die grundlegenden Ackerlandinformationen von einem automatischen Erkennungsmodul (11) durch eine Festpunkterkennung oder eine Bewegungserkennung erhalten werden.

3. Das Verfahren zur Routenplanung nach Anspruch 2, **dadurch gekennzeichnet, dass** das automatische Erkennungsmodul (11) ein Infrarotsensor, ein Lasersensor, ein Ultraschallsensor, ein Bildsensor oder ein GPS-Satellitenpositionierungsmodul ist.

4. Das Verfahren zur Fahrwegplanung nach Anspruch 1, **dadurch gekennzeichnet, dass** Schritt (a) außerdem Folgendes umfasst:
das Erkennen, ob ein Hindernis vorhanden ist, durch einen Hindernisvordetektor (13);
Das Erzeugen einer Hindernisinformation und Senden der Hindernisinformation an das Wegplanungsgerät (20).

5. Ein Fahrwegplanungssystem (100), das in einer automatischen Erntemaschine (1) angewendet wird, umfassend:
ein Erkennungsgerät (10), das so konfiguriert ist, dass es grundlegende Ackerlandinformationen über ein Ackerland erhält; und
eine Wegplanungseinrichtung (20), die mit der Erfassungseinrichtung (10) verbunden und so konfiguriert ist, dass sie die grundlegenden Ackerlandinformationen der Erfassungseinrichtung (10) analysiert und einen Fahrweg der automatischen Erntemaschine (1) gemäß den grundlegenden Ackerlandinformationen plant, wobei die grundlegenden Ackerlandinformationen Größe, Fläche, Form, Koordinaten oder Kulturkategorie des Ackerlandes umfassen;
die Erkennungseinrichtung (10) umfasst weiterhin mindestens einen Hindernisfahrdetektor (14), der mit der Wegplanungseinrichtung (20) verbunden ist, wobei der Hindernisfahrdetektor (14) an der automatischen Erntemaschine (1) angeordnet ist und zum Senden einer Nachricht konfiguriert ist. Die Hindernisinformationen an das Wegplanungsgerät (20), wenn die automatische Erntemaschine (1) auf ein Hindernis stößt, und das Wegplanungsgerät (20) ist außerdem so konfiguriert, dass es entsprechend den Hindernisinformationen anhält, weiterfährt oder einen anderen Weg neu plant;
**dadurch gekennzeichnet, dass** die Wegplanungseinrichtung (20) ein Wegeinstellmodul (21) umfasst, das dazu konfiguriert ist, basierend auf der Form des Ackerlandes einen Fahrmodus der automatischen Erntemaschine (1) voreinzustellen und eine Fahrinformation zu erzeugen, die die automatische Erntemaschine (1), die auf der Grundlage der Fahrinformationen fährt, wobei der Fahrmodus homozentrisch-quadratisch oder zick-zack-förmig ist oder spiralförmig von außen nach innen in Kreisen verläuft, wobei der Fahrweg in homozentrischquadratischer Form ausgewählt wird, wenn das Ackerland quadratisch ist, und der Fahrweg in Zickzackform wird gewählt, wenn das Ackerland rechteckig ist.

6. Das Fahrwegplanungssystem (100) nach Anspruch 5, **dadurch gekennzeichnet, dass** die Erfassungseinrichtung (10) mindestens ein automatisches Erfassungsmodul (11) umfasst, das mit der Pfadplanungseinrichtung (20) verbunden ist, wobei das automatische Erfassungsmodul (11) ist dazu konfiguriert, die grundlegenden Ackerlandinformationen zu erhalten und die grundlegenden Ackerlandinformationen an das Wegplanungsgerät (20) zu übertragen.

7. Das Fahrwegplanungssystem (100) nach Anspruch 6, **dadurch gekennzeichnet, dass** das automatische Erkennungsmodul (11) auf einer automatischen Erntemaschine (1), einem unbemannten Flugzeug (Drohne) oder einem drahtlosen Detektor angeordnet ist, um die Bewegungserkennung durchzuführen.

8. Das Fahrwegplanungssystem (100) nach Anspruch 6, **dadurch gekennzeichnet, dass** das automatische Erkennungsmodul (11) ein Infrarotsensor, ein Lasersensor, ein Ultraschallsensor, ein Bildsensor oder ein GPS-Satellitenpositionierungsmodul ist.

9. Das Fahrwegplanungssystem (100) nach Anspruch 5, **dadurch gekennzeichnet, dass** die Erfassungseinrichtung (10) mindestens ein manuelles Einstellmodul (21) umfasst, das mit dem Wegplanungsgerät (20) verbunden ist und in das grundlegende Ackerlandinformationen über Wegplanungseinrichtung (20) durch das manuelle Einstellmodul (21) eingegeben werden.

10. Das Fahrwegplanungssystem (100) nach Anspruch 5, **dadurch gekennzeichnet, dass** die Erkennungsvorrichtung (10) außerdem mindestens einen Hindernisfahrdetektor (14) umfasst, der mit der Wegplanungsvorrichtung (20) verbunden ist, wobei der Hindernisfahrdetektor (14) an der automatischen Erntemaschine (1) angeordnet und dazu konfiguriert ist, um eine Hindernisinformation an die Wegplanungseinrichtung (20) zu senden, wenn die automatische Erntemaschine (1) auf ein Hindernis trifft, und die Wegplanungseinrichtung (20) ist weiterhin dazu konfiguriert, erneut Ihr Planen eines anderen Reisewegs entsprechend den Hindernisinformationen zu konfigurieren.

11. Das Fahrwegplanungssystem (100) nach Anspruch 10, **dadurch gekennzeichnet, dass** der Hindernisfahrdetektor (14) einen Fahrerfassungssensor (141) umfasst, wobei der Fahrerfassungssensor (141) eine Vielzahl von Kameras (1411) beinhaltet, die das Automatikgetriebe der Erntemaschine (1) umgeben und so konfiguriert sind, dass sie die Bilder rund um die automatische Erntemaschine (1) sammelt.

12. Das Fahrwegplanungssystem (100) nach Anspruch 10, **dadurch gekennzeichnet, dass** der Hindernisfahrdetektor (14) mindestens eine Sonde (142) umfasst, die vor der automatischen Erntemaschine (1) angeordnet ist, wobei die Sonde (142) so konfiguriert ist, um zu erkennen, ob sich vor dem Ernteautomaten (1) ein Hindernis befindet.

13. Das Fahrwegplanungssystem (100) nach Anspruch 10, **dadurch gekennzeichnet, dass** der Hindernisfahrdetektor (14) mindestens einen Infrarotdetektor (143) umfasst, der vor der automatischen Erntemaschine (1) angeordnet ist, wobei der Infrarotdetektor (143) ) so konfiguriert ist, dass er Personen oder Tiere erkennt, die sich plötzlich dem Ernteautomat (1) nähern.

## Revendications

1. Procédé de planification de la trajectoire de déplacement d'une moissonneuse automatique (1), comprenant :
(a) la détection et formation, par un dispositif de détection (10), d'une information de base sur une terre agricole ;
et
(b) la réception et analyse, par un dispositif de planification de la trajectoire (20), des informations de base sur les terres agricoles, et
la planification d'une trajectoire de déplacement de la moissonneuse automatique (1) en fonction des informations de base sur le terrain agricole, les informations de base sur le terrain agricole comprenant la taille, la surface, la forme, les coordonnées ou la catégorie de culture du terrain agricole ;
lorsque la moissonneuse automatique (1) est en marche, la génération, par un détecteur d'obstacle (14), d'une information sur l'obstacle lorsqu'un obstacle est détecté, et l'envoi d'information sur l'obstacle au dispositif de planification de la trajectoire (20) ;
la détermination, par le dispositif de planification de la trajectoire (20), si la moissonneuse automatique (1) s'arrête, continue de rouler ou planifie à nouveau une autre trajectoire de déplacement en conséquence ;
**caractérisé par le fait que** le procédé de planification de la trajectoire de voyage comprend en outre :
le préréglement, par un module de réglage de trajectoire (21) du dispositif de planification de trajectoire (20), un mode de déplacement de la moissonneuse automatique (1) en fonction de la forme du terrain agricole et la génération d'une information de déplacement, le roulement de la moissonneuse automatique (1) en fonction de l'information de déplacement, l'information de déplacement comprend une trajectoire de déplacement en forme de carré homocentrique ou en forme de zigzag, ou une trajectoire
en spirale de l'extérieur vers l'intérieur en cercles, la trajectoire de déplacement en forme de carré homocentrique est sélectionnée lorsque les terres agricoles sont carrées, et la trajectoire de déplacement en forme de zigzag est sélectionnée lorsque les terres agricoles sont rectangulaires.

2. La méthode de planification des itinéraires de déplacement de la revendication 1, **caractérisée par le fait qu'**à l'étape (a), les informations de base sur les terres agricoles sont obtenues par un module de détection automatique (11) au moyen d'une détection de point fixe ou d'une détection de mouvement.

3. Le procédé de planification de la trajectoire de la revendication 2, **caractérisé par le fait que** le module de détection automatique (11) est un capteur infrarouge, un capteur laser, un capteur ultrasonique, un capteur d'image ou un module de positionnement par satellite GPS.

4. Le procédé de planification de la trajectoire de déplacement de la revendication 1, **caractérisé par le fait que** l'étape (a) comprend en outre :
la détection, par un pré-détecteur d'obstacle (13), de l'existence d'un obstacle ;
la génération d'une information sur l'obstacle et l'envoi d'information sur l'obstacle au dispositif de planification de la trajectoire (20).

5. Système de planification de la trajectoire (100) appliqué à une moissonneuse automatique (1), comprenant:
un dispositif de détection (10) configuré pour obtenir des informations de base sur une terre agricole ; et
un dispositif de planification de trajectoire (20) connecté au dispositif de détection (10) et configuré pour analyser les informations de base sur les terres agricoles du dispositif de détection (10) et planifier une trajectoire de déplacement de la moissonneuse automatique (1) en fonction des informations de base sur les terres agricoles, les informations de base sur les terres agricoles comprenant la taille, la surface, la forme, les coordonnées ou la catégorie de culture de la terre agricole ;
le dispositif de détection (10) comprend en outre au moins un détecteur d'obstacle (14) connecté au dispositif de planification de la trajectoire (20), le détecteur d'obstacle (14) est disposé sur la moissonneuse automatique (1) et est configuré pour envoyer une information d'obstacle au dispositif de planification de la trajectoire (20) lorsque la moissonneuse automatique (1) rencontre un obstacle, et le dispositif de planification de la trajectoire (20) est en outre configuré pour s'arrêter, continuer à se déplacer ou replanifier une autre trajectoire en fonction de l'information d'obstacle ;
**caractérisé en ce que** le dispositif de planification de trajectoire (20) comprend un module de définition de trajectoire (21), qui est configuré pour prédéfinir un mode de déplacement de la moissonneuse automatique (1) sur la base de la forme du terrain agricole et pour générer une information de déplacement, amenant la moissonneuse automatique (1) à se déplacer selon les informations sur les déplacements, le mode de déplacement est homocentrique-carré ou en zigzag, ou en spirale de l'extérieur vers l'intérieur en cercles, la trajectoire de déplacement homocentrique-carré est sélectionnée lorsque les terres agricoles sont carrées, et la trajectoire de déplacement en zigzag est sélectionnée lorsque les terres agricoles sont rectangulaires.

6. Le système de planification de trajectoire (100) de la revendication 5, **caractérisé par le fait que** le dispositif de détection (10) comprend au moins un module de détection automatique (11) connecté au dispositif de planification de trajectoire (20), le module de détection automatique (11) est configuré pour obtenir l'information de base sur les terres agricoles et transmettre l'information de base sur les terres agricoles au dispositif de planification de trajectoire (20).

7. Le système de planification de la trajectoire (100) de la revendication 6, **caractérisé par le fait que** le module de détection automatique (11) est placé sur une moissonneuse automatique (1), un aéronef sans pilote ou un détecteur sans fil pour effectuer la détection de mouvement.

8. Le système de planification de la trajectoire (100) de la revendication 6, **caractérisé par le fait que** le module de détection automatique (11) est un capteur infrarouge, un capteur laser, un capteur ultrasonique, un capteur d'image ou un module de positionnement par satellite GPS.

9. le système de planification de trajectoire (100) de la revendication 5, **caractérisé par le fait que** le dispositif de détection (10) comprend au moins un module de réglage manuel (21) connecté au dispositif de planification de trajectoire (20), une information de base sur les terres agricoles est introduite dans le dispositif de planification de trajectoire (20) par l'intermédiaire du module de réglage manuel (21).

10. Le système de planification de trajectoire (100) de la revendication 5, **caractérisé par le fait que** le dispositif de détection (10) comprend en outre au moins un détecteur d'obstacle (14) connecté au dispositif de planification de la trajectoire (20), le détecteur d'obstacle (14) est disposé sur la moissonneuse automatique (1) et est configuré pour envoyer une information d'obstacle au dispositif de planification de la trajectoire (20) lorsque la moissonneuse automatique (1) rencontre un obstacle, et le dispositif de planification de la trajectoire (20) est en outre configuré pour s'arrêter, continuer à se déplacer ou replanifier une autre trajectoire en fonction de l'information d'obstacle ;

11. Le système de planification de trajectoire (100) de la revendication 10, **caractérisé par le fait que** le détecteur d'obstacles (14) comprend un capteur de capture de conduite (141), le capteur de capture de conduite (141) comprend une pluralité de caméras (1411) entourant la moissonneuse automatique (1) et configurées pour collecter des images autour de la moissonneuse automatique (1).

12. Le système de planification de trajectoire (100) de la revendication 10, **caractérisé par le fait que** le détecteur d'obstacles (14) comprend au moins une sonde (142) disposée devant la moissonneuse automatique (1), la sonde (142) étant configurée pour détecter si un obstacle existe devant la moissonneuse automatique (1).

13. Le système de planification de trajectoire (100) de la revendication 10, **caractérisé par le fait que** le détecteur d'obstacles (14) comprend au moins un détecteur infrarouge (143) disposé devant la moissonneuse automatique (1), le détecteur infrarouge (143) étant configuré pour détecter les personnes ou les animaux qui s'approchent soudainement de la moissonneuse automatique (1).
